# EUROPÄISCHE PATENTSCHRIFT

(11) **EP 0 898 158 B1**
(45) Veröffentlichungstag und Bekanntmachung des Hinweises auf die Patenterteilung: **14.12.2005**
(21) Anmeldenummer: 98810744.7
(22) Anmeldetag: 31.07.1998
(51) Int. Cl.: G01J 5/00

(54) **Gasturbine mit einem optischen Hochtemperatur-Pyrometer**
Gas turbine with optical high-temperature pyrometer
Turbine à gaz avec un pyromètre optique à haute température

(30) Priorität: 21.08.1997 DE 19736276
(43) Veröffentlichungstag der Anmeldung: 24.02.1999
(73) Patentinhaber: Alstom Technology Ltd, 5400 Baden (CH)
(72) Erfinder: Dobler, Thomas, 5436 Würenlos (CH); Evers, Wolfgang, Dr., 5415 Nussbaumen (CH); Haffner, Ken, 5400 Baden (CH)

(56) Entgegenhaltungen:
- EP-A- 0 515 172
- DE-A- 4 128 844
- DE-A- 19 549 214
- US-A- 4 521 088
- US-A- 5 364 186
- PATENT ABSTRACTS OF JAPAN vol. 011, no. 029 (P-540), 28. Januar 1987 (1987-01-28) & JP 61 200437 A (HITACHI LTD), 5. September 1986 (1986-09-05)

## Beschreibung

### TECHNISCHES GEBIET

Die Erfindung bezieht sich auf das Gebiet der Gasturbinentechnik in Kombination mit der Hochtemperatur - Pyrometrie. Sie geht aus von einer Gasturbine mit einem Hochtemperatur - Pyrometer nach dem Oberbegriff des Anspruchs 1 sowie von einem Verfahren zur Überwachung einer Gasturbine mit Hilfe eines Hochtemperatur - Pyrometers nach dem Oberbegriff des Anspruchs 9.

### STAND DER TECHNIK

Aus dem Stand der Technik sind unterschiedliche Methoden zur Temperaturmessung in Gasturbinen bekannt. Die zugrundeliegenden physikalischen Messprinzipien beruhen u. a. auf der Temperaturabhängigkeit eines elektrischen Widerstands, des Seebeck - Effektes (Thermoelement), einer Farbreaktion (Thermofarbe), der Schallgeschwindigkeit in Gasen oder der spektralen Verteilung gestreuter oder emittierter elektromagnetischer Wärmestrahlung.

Temperatursensoren für Gasturbinen müssen extremen Belastungen hinsichtlich Temperatur, Druck und Vibration standhalten. Herkömmliche Thermoelemente altern unter diesen Einsatzbedingungen sehr schnell. Zudem sollen auch rotierende Teile gemessen werden, was nur mit aufwendiger Telemetrie möglich ist. Der Einsatz von Thermofarben ist auf experimentelle Untersuchungen beschränkt. Aktive Lasermessverfahren, wie z. B. Rayleigh - Streuung oder CARS ("Coherent Antistokes Raman Scattering"), sind zwar berührungslos, aber aufwendig und schwierig zu implementieren.

Es wurde daher schon früh erkannt, dass die Strahlungspyrometrie als passive optische Methode besser zur Temperaturmessung in Gasturbinen unter Betriebsbedingungen geeignet ist. In der Patentanmeldung WO 86/00131 wird ein optisches Pyrometer mit einem Sichtkanal von ausserhalb der Turbine bis auf die erste Laufschaufelreihe offenbart. Die Messapparatur zeichnet sich dadurch aus, dass das Pyrometer und alle optischen Komponenten inklusive Detektor von der Hochtemperatur- und Hochdruckumgebung der Gasturbine durch ein Sichtfenster getrennt sind. Als Sichtkanäle kommen alle Verbindungswege in Frage, die sich im Strömungskanal im wesentlichen geradlinig von der ersten Laufschaufelreihe durch eine Teilung zwischen zwei Leitschaufeln zum brennkammerseitigen Turbinengehäuse hin erstrecken und keine heissgasführenden Turbinenteile tangieren. Der Sichtkanal ist so breit ausgelegt, dass eine freie Sichtverbindung auch in einer thermisch deformierten Maschine erhalten bleibt und zudem durch Justierung des Strahlengangs innerhalb des Kanals verschiedene Zonen der Laufschaufeln abgebildet werden können. Sichtkanal und Sichtfenster werden durch Druckluft gespült. In einem derartigen Messaufbau können auch die Temperaturen von Leitschaufeln, des heissen Gaskanals, der Brennerwände oder des Gases gemessen werden. Hauptnachteil dieses Pyrometers ist die inhärente Begrenzung der Messgenauigkeit aufgrund des enorm grossen Messabstands von bis zu mehreren Metern. Dadurch können nämlich die Fläche und Position des zu erfassenden Wärmebildes nur ungenügend kontrolliert werden.

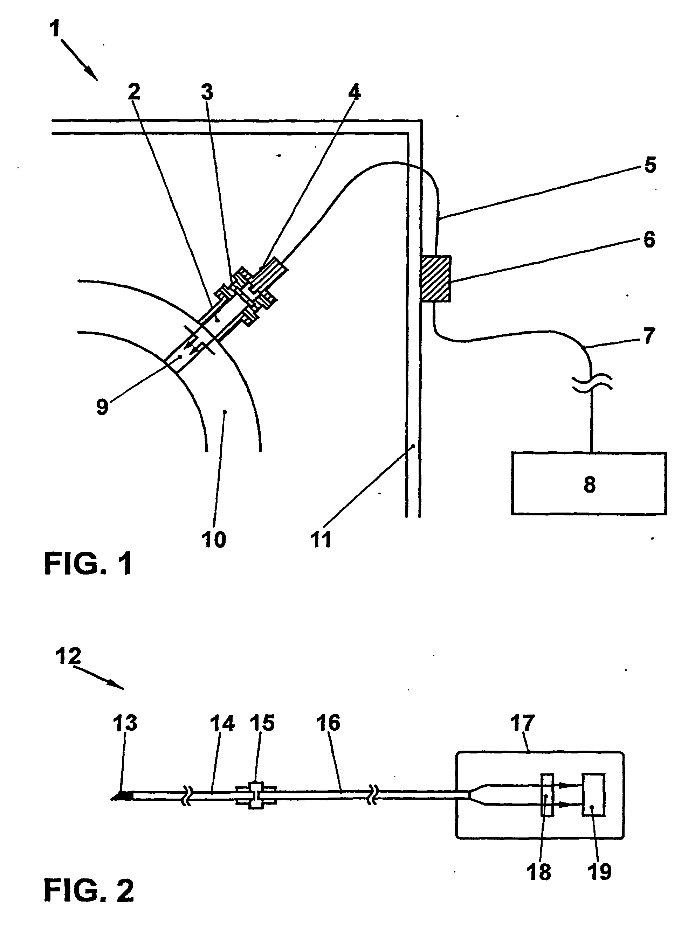

Ein verwandtes Hochtemperatur - Pyrometer mit Sichtkanal und druckdichtem Sichtfenster wird von der Firma Land Instruments International, Inc. unter dem Namen TBTMS ("Turbine Blade Temperature Measurement System") angeboten. Gemäss Fig. 1 endet der Sichtkanal 2 ausserhalb des Turbinengehäuses 10 mit einem Sichtfenster 3. Dort wird die Wärmestrahlung von einer Optik 4 in eine Faser 5 eingekoppelt und von dieser aus der Schallschutzhaube ("Enclosure") 11 herausgeführt. In einem Detektor 6 wird das optische Signal in ein elektrisches umgesetzt, das über eine Signalleitung 7 einer Messelektronik 8 zugeführt wird. Die Einkoppeloptik 4 und die Verbindungsfaser 5 sind Umgebungstemperaturen von höchstens 400 °C ausgesetzt. Der erhöhten Verschmutzungsgefahr der Optik 4 in der Nähe zum Gasturbineninneren muss mit einer starken Luftspühlung 9 begegnet werden. Zu diesem Zweck kann der Sichtkanal 2 im Turbineninneren ein Schutzrohr von bis zu 1,2 m Länge z. B. aus Siliziumkarbid (SiC) aufweisen, das Temperaturen bis zu 1550 °C standhält und Russpartikel usw. fernhält.

Ein grosser Nachteil des Land - Pyrometers 1 ist die Komplexität des an dem Turbinengehäuse 10 zu montierenden optischen Sensorkopfes. Dieser umfasst nämlich einen Justierkopf für die Optik 4 zur Abbildung des Strahlungsobjektes, die Druck- und Temperaturabschottung inklusive des Sichtfensters 3, eine aufwendige Luft- oder Wasserkühlung sowie das Schutz- oder Sichtrohr mit dem Spühlsystem. Das Gesamtgewicht eines derartigen Sensorkopfes kann 50 kg deutlich überschreiten. Auch schränkt der Sichtrohrdurchmesser von ca. 15 mm - 60 mm die möglichen Einbauorte in Gasturbinen stark ein und kann eine unerwünschte mechanische Schwächung von Turbinenteilen bedingen. Wie später genauer ausgeführt wird, führt diese Einschränkung wegen der Geradlinigkeit des Sichtkanals 2 zu sehr flachen, die Temperaturmessung verfälschenden Beobachtungswinkeln, unter denen die Laufschaufeln abbildbar sind. Darüberhinaus ist die Messdistanz mit über 1 m wiederum sehr gross. Der Messfleck erfasst daher eine zu grosse Zone der Laufschaufeln und u. U. auch Teile des Rotors, wodurch weitere Messfehler auftreten. In Versuchen mit dem Land - Pyrometer wurden Temperaturfehler von über 50 °C nachgewiesen.

Es ist darüberhinaus Stand der Technik, ein Hochtemperatur - Pyrometer mit einem massivoptischen Sensorkopf in Gestalt eines starren, hochtemperaturfesten, lichtleitenden Saphirstabs auszustatten. Fig. 2 zeigt eine Ausführung der Luxtron Corporation, Accufiber Division. Ein schwarzer Hohlraumstrahler 13 an der Spitze des Saphirstabs 14 dient als Messsonde, die in den heissen Gasstrom gehalten und dort aufgeheizt wird. Die Wärmestrahlung wird wiederum ausserhalb der Heissgaszone, d. h. ausserhalb des Turbinengehäuses, über einen optischen Koppler 15 in eine Niedertemperatur - Faser 16 eingekoppelt, aus der Schallschutzhaube herausgeführt und einem Detektor 17 mit optischem Filter 18 und Photodiode 19 zugeführt. Zur Messung von Laufschaufeltemperaturen kann auch die Saphirspitze flach poliert sowie gebogen sein, um berührungslos die Wärmestrahlung des gewünschten Beobachtungsobjektes aufzufangen.

Die Saphirstäbe haben typischerweise Längen von bis zu 0,4 m und Durchmesser von über 1 mm. Sie werden zur Spitze hin ausserordentlich heiss. Messwertverfälschungen werden hauptsächlich durch Eigenstrahlung, Eigenabsorption, Strahlungsverluste an die kühlere Umgebung und seitliche Einkopplung von Wärmestrahlung entlang des freistehenden Saphirstabes verursacht. Bei der geschlossenen Ausführungsform mit Kavität 13 kommen Messfehler aufgrund der Wärmeleitung im Saphirstab hinzu. In ungünstigen Fällen hat die gemessene Temperatur mit der Heissgas- oder Objekttemperatur nicht mehr viel gemeinsam. Ferner ist bei beiden Ausführungsformen die Fliessverformung der Stäbe 14 oberhalb von 1300 °C problematisch, durch welche die der Gasströmung aussetzbare Saphirlänge auf unter 10 mm begrenzt ist. Zum Schutz werden wassergekühlte Trägersonden und Saphirstützrohre verwendet. Diese Lösungen sind jedoch unbefriedigend, da die Trägersonde den Gasstrom stört und das Stützrohr starken Temperaturgradienten zwischen der Luv- und Leeseite im Gasstrom und damit grossen inneren Spannungen ausgesetzt ist.

Zur Berechnung der Temperatur aus der Wärmestrahlung werden bekannte pyrometrische Signalauswertungsverfahren verwendet, wie sie z. B. in dem Lehrbuch "Temperaturstrahlung" von W. Pepperhoff, Verlag von Dr. D. Steinkopff, Darmstadt 1956, angegeben werden. Insbesondere kann das Spektrum der Wärmestrahlung zur Temperaturbestimmung monochromatisch, bichromatisch oder breitbandig ausgewertet werden. Eine Zweifarbenpyrometrie ist vor allem zur Eliminierung des Einflusses einer veränderlichen Emissivität des Strahlungsobjektes nützlich.

Die genannten pyrometrischen Sensoren sind im Prinzip zur Bestimmung einer mittleren Temperatur einer Laufschaufelreihe oder individueller Temperaturen der einzelnen Laufschaufeln einsetzbar. Die mittlere Temperatur ist ein nützlicher Parameter zum Schutz der Gasturbine, beispielsweise zur Begrenzung der thermischen Belastung der Gasturbine durch eine automatische Lastabsenkung. Die individuellen Temperaturen sind als Frühwarnung vor Überhitzung der Laufschaufeln z. B. wegen verstopfter oder beschädigter Kühlkanäle geeignet.

Jedoch müssen zur Erfüllung dieser Aufgaben extrem hohe Anforderungen an die Genauigkeit und Langzeit - Zuverlässigkeit der Temperaturmessung gestellt werden. Die heutzutage verfügbaren Pyrometer erreichen die gewünschte Messgenauigkeit aus den genannten Gründen nicht. Zudem sind sie kompliziert aufgebaut und voluminös, benötigen starke Kühlsysteme und sind insgesamt schwierig in Gasturbinen integrierbar. Die Vorteile einer flexiblen optischen Übertragung werden nur auf der Niedertemperaturseite ausgeschöpft. Auf der Hochtemperaturseite hingegen schränkt die Geometrie des Sichtkanals bzw. Saphirstabs die Flexibilität und Adaptierbarkeit der Pyrometer an die anspruchsvolle Gasturbinenumgebung ein.

Im U. S. Pat. No. 4,521,088 wird eine Gasturbine mit einem Hochtemperatur - Pyrometer gemäss Oberbegriff von Anspruch 1 offenbart. Das Hochtemperatur - Pyrometer weist eine lichtleitende Messsonde zur Erfassung und Übertragung von Wärmestrahlung zu einem Detektor auf, wobei der Detektor mit einer Messelektronik verbunden ist. Dabei wird mittels einer Saphirlinse Wärmestrahlung von einem Hochtemperaturbereich der Gasturbine durch einen Sichtkanal auf das Ende einer Niedertemperaturfaser fokussiert, dem Detektor zugeführt und durch pyrometrische Signalauswertung die Temperatur von Gasturbinenschaufeln bestimmt. Die Messsonde befindet sich also ausserhalb des Hochtemperaturbereichs und kann Wärmestrahlung nur unter ungünstigem Blickwinkel und mit schlechter Ortsauflösung erfassen. Daraus resultiert eine relativ ungenaue Temperaturmessung in der Gasturbine.

In der EP 0 515 172 A1 wird ein faseroptisches Hochtemperatur - Pyrometer offenbart. Das Pyrometer umfasst eine lichtleitende Messsonde zur Erfassung und Übertragung von Wärmestrahlung zu einem Detektor, der mit einer Messelektronik verbunden ist. Die lichtleitende Messsonde ihrerseits besteht aus einer hochtemperaturfesten Faser, die an ihrer Faserspitze einen hochtemperaturfesten Sensorkopf in Form eines feuergehärteten Schwarzkörperstrahlers aufweist. Die Faser kann mit einer hochtemperaturfesten biegsamen Ummantelung aus Gold oder Platin beschichtet sein. Der Schwarzkörperstrahler nimmt durch Wärmeleitung, Konvektion und gegebenenfalls Strahlung die Temperatur seiner unmittelbaren Umgebung an und setzt diese in seine Eigenstrahlung um, die dann von der Faserspitze erfasst wird und von der Hochtemperaturfaser einer pyrometrischen Messeinheit zugeführt wird. Der Schwarzkörperstrahler-Sensorkopf besitzt daher kein eigentliches Blickfeld, hat eine richtungsunspezifische Wärmeempfindlichkeit und kann daher innerhalb einer heissen Umgebung nicht auf ein Messobjekt ausgerichtet werden. Insbesondere ist der Schwarzkörperstrahler intransparent für die Wärmestrahlung des Messobjekts. Die Messsonde wird in Öfen zur Halbleiterherstellung eingesetzt und kann aufgrund ihrer Flexibilität, Hochtemperaturtauglichkeit und richtungsunspezifischen Wänneempfindlichkeit an beliebigen Orten im Ofen eingebaut werden.

### DARSTELLUNG DER ERFINDUNG

Aufgabe der vorliegenden Erfindung ist es, eine gattungsgemässe Gasturbine mit Hochtemperatur - Pyrometer dahingehend weiterzuentwickeln, dass eine verbesserte pyrometrische Temperaturmessung in der Gasturbine resultiert. Eine weitere Aufgabe besteht darin, ein verbessertes Verfahren zur Überwachung einer solchen Gasturbine anzugeben. Diese Aufgaben werden erfindungsgemäss durch die Merkmale der unabhängigen Ansprüche gelöst.

Die Erfindung hat eine Gasturbine zum Gegenstand, die insbesondere zur Erzeugung elektrischer Energie geeignet ist, und die ein Hochtemperatur - Pyrometer zur Temperaturmessung in der Gasturbine umfasst, wobei das Hochtemperatur - Pyrometer eine lichtleitende Messsonde zur Erfassung und Übertragung von Wärmestrahlung zu einem Detektor aufweist und der Detektor mit einer Messelektronik verbunden ist, wobei die Messsonde eine optische Hochtemperaturfaser mit einem hochtemperaturfesten mikrooptischen Sensorkopf umfasst und die Hochtemperaturfaser und der Sensorkopf eine hochtemperaturfeste, biegsame Ummantelung aufweisen, der mikrooptische Sensorkopf eine Empfangsfläche zur Erfassung von Wärmestrahlung eines beabstandeten Messobjekts aufweist, der mikrooptische Sensorkopf und die Hochtemperaturfaser aus einem für den gewünschten Spektralbereich transparenten Material bestehen und die Messsonde in einem Hochtemperaturbereich im Innenraum der Gasturbine zur Erfassung der Wärmestrahlung thermisch hochbelasteter Bauteile, von Temperaturen der Gehäuseumgebung oder von Gastemperaturen angeordnet ist. Die Anordnung der Messsonde ist in einer Bohrung innerhalb einer Leitschaufel vorgesehen, vorzugsweise in einer Leitschaufel langs der ersten oder zweiten Leitschaufelreihe der Gasturbine. Ferner verläuft die Hochtemperaturfaser mindestens teilweise in einem Kühlkanal der Gasturbine, wobei die Gasturbine zudem ein Führungsrohr zur Aufnahme der Messsonde und/oder einer Verlängerungsfaser vorsicht.

In einem anderen Aspekt besteht die Erfindung in einem Verfahren zur Überwachung einer solchen Gasturbine, wobei in der Messelektronik ein charakteristisches Temperatursignal mindestens eines thermisch hochbelasteten Bauteils berechnet wird und das Temperatursignal als Schutzsignal zur Überwachung der Gasturbine verwendet wird. Das thermisch hochbelastete Bauteil betrifft eine Reihe von Lauf- oder Leitschaufeln und als charakteristisches Temperatursignal wird oder werden ein mittleres Temperatursignal und/oder Einzelzemperaturen der Lauf- oder Leitschaufeln verwendet.

Ein erstes Ausführungsbeispiel zeigt eine Messsonde, die eine Mikrolinse und eine Faser aus Quarzglas oder Saphirkristall umfasst, wobei die Mikrolinse und Faser mit einer Hochtemperaturbeschichtung aus Gold versehen und/oder in einer dünnen, biegbaren Schutzkapillare aus Inconel untergebracht sind.

Ein zweites und drittes Ausführungsbeispiel stellt einen bevorzugten Einbau der lichtleitenden Messsonde in einer Niederdruck - und in einer HochdruckLeitschaufel dar.

Ein viertes Ausführungsbeispiel zeigt einen Einbau der Messsonde in einer Leitschaufel, bei dem in der Schaufelwand zur Aufnahme einer Saphir- oder Quarzfaser eine Bohrung mit einem Sackloch vorgesehen ist und das Sackloch als Mikrokavität bzw. schwarzer Hohlraumstrahler wirkt.

Zusätzliche Ausführungsbeispiele ergeben sich aus den übrigen Ansprüchen.

Ein Vorteil des Pyrometers liegt darin, dass es aufgrund seiner Hochtemperaturtauglichkeit und geometrischen Flexibilität besonders für einen Einbau an heissen, schwer zugänglichen Orten in einer Gasturbine geeignet ist.

Ein weiterer Vorteil ist darin zu sehen, dass das Pyrometer in der Gasturbine in geringem Abstand vom Messobjekt und unter günstigem Blickwinkel montierbar ist, wodurch die Messgenauigkeit wesentlich verbessert wird.

Speziell vorteilhaft ist es, dass mit Hilfe eines erfindungsgemässen Pyrometers die Laufschaufeltemperaturen kontrollierbar sind und dadurch die Gasturbine hinsichtlich der Temperaturverteilung über den Umfang am Turbineneintritt, der Betriebssicherheit, des Wirkungsgrades, der Wartungsintervalle und insgesamt der Zuverlässigkeit und Verfügbarkeit verbessert werden kann.

### KURZE BESCHREIBUNG DER ZEICHNUNG

Die Erfindung wird nachstehend anhand von Ausführungsbeispielen erläutert. Es zeigen:
- Fig. 1: ein Hochtemperatur - Pyrometer mit Sichtkanal der Firma Land Instruments International, Inc. (Stand der Technik);
- Fig. 2: ein Hochtemperatur - Pyrometer mit Saphirstab der Firma Luxtron Corporation, Accufiber Division (Stand der Technik);
- Fig. 3: ein Hochtemperatur - Pyrometer mit einer hochtemperaturfesten, flexiblen Messsonde mit mikrooptischem Sensorkopf;
- Fig. 4: einen Einbau eines Pyrometers gemäss Fig. 3 in einer Niederdruck-Laufschaufel;
- Fig. 5: einen Einbau eines Pyrometers gemäss Fig. 3 in einer Hochdruck-Laufschaufel;
- Fig. 6: einen Einbau eines Pyrometers gemäss Fig. 3 mit einer Mikrokavität in einer Leitschaufel.

In den Figuren sind gleiche Teile mit gleichen Bezugszeichen versehen.

### WEGE ZUR AUSFÜHRUNG DER ERFINDUNG

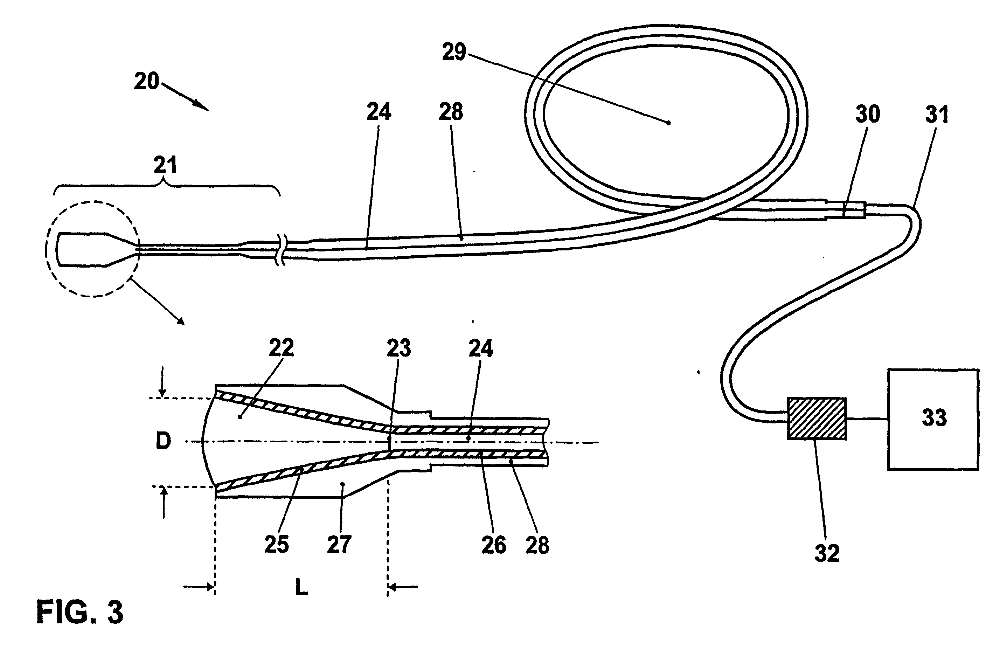

Fig. 3 zeigt ein erstes Ausführungsbeispiel eines Hochtemperatur - Pyrometers 20. Die pyrometrische bzw. lichtleitende Messsonde 21 umfasst eine hochtemperaturtaugliche optische Faser 24 mit einem hochtemperaturtauglichen mikrooptischen Sensorkopf 22, welche eine hochtemperaturfeste, biegsame Ummantelung 25, 26, 27, 28 aufweisen. Der mikrooptische Sensorkopf 22 und die Faser 24 stehen miteinander in unmittelbarer optischer Verbindung, d. h. es ist keine Einkoppeloptik notwendig, um Licht vom Sensorkopf 22 in die Faser 24 zu übertragen. Wärmestrahlung.eines Messobjektes wird vom Sensorkopf 22 erfasst, in die Faser 24 gekoppelt, zu einem Detektor 32 übertragen und in mindestens ein elektrisches Signal umgewandelt. Aus diesem wird in einer Messelektronik 33 mit Hilfe bekannter pyrometrischer Signalauswertungsverfahren ein die Temperatur des Messobjektes charakterisierendes Temperatursignal berechnet.

Der mikrooptische Sensorkopf 22 besteht im einfachsten Fall aus einem Ende der Faser 24, das z. B. flach poliert sein kann. Zur Vergrösserung der Empfangsfläche ist es vorteilhaft, wenn der Sensorkopf 22 ein Konus ("taper") 22 ist. Besonders günstig ist es, wenn der Konus 22 wie dargestellt eine Mikrolinse 22 mit einer konvexen, z. B. sphärischen Vorderfläche ist. Der Konus 22 hat z. B. einen maximalen Durchmesser D = 1 mm - 2 mm und eine Länge L = 3 - 6 mm. Für eine effiziente Lichteinkopplung in die Faser 24 sollte sich der Konus 22 bis auf den Faserdurchmesser verjüngen. Es ist auch denkbar, den Sensorkopf 22 mit einem kurzen stabförmigen Lichtleiter zur Faser 24 hin zu verlängern, sofern dadurch die Flexibilität und Einbaubarkeit der Messsonde 21 insgesamt nicht beeinträchtigt wird.

Durch die Mikrolinse 22 wird die numerische Apertur bzw. der optische Öffnungswinkel der Messsonde 21 eingeschränkt und aufgrund dieser Einengung des Blickfeldes weniger Störstrahlung empfangen. Zudem kann durch die Brechkraft der Mikrolinse 22 die gesamte auf die Empfangsfläche auftreffende Wärmestrahlung eines Messobjektes effizient in die Faser 24 eingekoppelt werden. Insbesondere können für eine gewünschte Grösse des Messflecks und einen vorgegebenen Objektabstandsbereich die Brennweite der Mikrolinse 22 und die Konuslänge L beispielsweise mit einem "ray - tracing" Programm optimiert werden. Schliesslich ist es wichtig, dass der Sensorkopf 22 und die Faser 24 einstückig ausgebildet sind oder miteinander in einer hochtemperaturfesten optischen Verbindung stehen.

Die Faser 24 und der Sensorkopf 22 müssen aus einem für den gewünschten Spektralbereich transparenten und hitzebeständigen Material bestehen. Eine geeignete Wahl ist Silikatglas bzw. Quarzglas mit einer Einsatztemperatur bis zu 1100 °C und einem typischen Transmissionsbereich von 0,3 µm - 2 µm. Insbesondere ist eine standardmässige "all - silica" Glasfaser mit Kern und Hülle ("cladding") aus Quarzglas als Hochtemperaturfaser 24 geeignet. Bevorzugt wird die Glasfaser 24 multimodig mit einem Stufenindexprofil und einem Kerndurchmesser kleiner als 400 µm gewählt. Eine einstückige Ausführung von Konus 22 und Faser 24 kann auf bekannte Weise beispielsweise aus einem Faserende durch Erhitzen und Stauchen oder Erhitzen und Tropfenbildung oder bei der Herstellung der Faser 24 durch Verwendung des Konus 22 als Keim oder durch Variation der Schmelzgeschwindigkeit ("feed rate") und Ziehgeschwindigkeit ("pull rate") hergestellt werden. Die konvexe Vorderfläche kann, falls erforderlich, durch Politur des Konus 22, durch Laserschmelzen und Wiedererstarren der Vorderfläche unter Wirkung der Oberflächenspannung o. ä. realisiert sein. Alternativ dazu kann der Konus 22 bzw. die Mikrolinse 22 aus Quarzglas vorgefertigt, insbesondere poliert, und über einen Spleiss 23, d. h. durch Verschmelzen im Lichtbogen, mit der Faser 24 verbunden werden. Als alternative hochtemperaturfeste optische Verbindungstechnik kann auch ein Laserschmelzverfahren, Glaslot o. ä. verwendet werden.

Eine weitere vorteilhafte Materialwahl für den Sensorkopf 22 und die Faser 24 ist Saphirkristall mit einer Einsatztemperatur bis zu ca. 1900 °C und einem typischen Transmissionsbereich von 0,2 µm - 5 µm. Saphir zeichnet sich zudem aufgrund seiner chemischen Trägheit durch eine hervorragende Langzeitbeständigkeit auch bei hohen Temperaturen und in korrosiver Umgebung aus. Heutzutage sind biegsame, monokristalline Saphirfasern mit einem Durchmesser von z. B. 300 µm und einer Länge bis zu einigen Metern erhältlich. Die Hochtemperaturfaser 24 kann vollständig oder zum Teil eine solche Saphirfaser sein. Eine einstückige Ausführung von Konus 22 oder Mikrolinse 22 und Faser 24 aus Saphir erfolgt prinzipiell mit den von Quarz bekannten Methoden. Ebenso können der Konus 22 oder die Mikrolinse 22 direkt aus Saphirkristall gezüchtet und durch Politur, Laserschmelzen usw. bearbeitet sein und z. B. über Glaslot mit einer Saphirfaser 24 in einer hochtemperaturfesten optischen Verbindung stehen. Mit Glaslot können auch Saphir mit Quarz, insbesondere ein Saphir - Sensorkopf 22 mit einer Quarzfaser 24, optisch verbunden werden.

In der Praxis soll eine derart aufgebaute Messsonde 21 vor Korrosion, Feuchtigkeit, mechanischer Beschädigung usw. geschützt werden. Insbesondere ist eine Quarzfaser 24 und/oder ein Quarz - Sensorkopf 22 bei hohen Temperaturen und chemisch aggressiver Umgebung einer starken Korrosion ausgesetzt und bedarf einer chemisch inerten, gut haftenden Hochtemperaturbeschichtung 25, 26, die aus einem Metall bestehen kann. Besonders vorteilhaft sind Gold bis zu 750 °C und Aluminium bis zu 550 °C. Oberhalb dieser Temperaturen wird die Eindiffusion zu stark. Es ist bekannt, Quarzfasern 24 mit einer solchen Beschichtung bzw. einem Mantel 26 zu versehen. Der Sensorkopf 22 wird mit Lot 25 ummantelt, wobei zur besseren Haftung des Lots 25 eine Grundierung aus Gold oder Aluminium aufgesputtert wird.

Die mechanische Schutzwirkung der Hochtemperaturbeschichtung 25, 26 ist eher gering. Ferner wird ein weit verbesserter mechanischer Schutz durch eine Schutzkapillare 27, 28 erzielt, die vorzugsweise aus einem Metall, insbesondere aus einer hitze- und korrosionsbeständigen Legierung wie z. B. Inconel, besteht. Die Schutzkapillare 27, 28 hat die Form eines dünnen Röhrchens, das zum Sensorkopf 22 hin eine stufenweise Verjüngung zur besseren Biegbarkeit aufweisen kann. Der Sensorkopf 22 selber kann ebenfalls von der Schutzkapillare 27, 28, insbesondere von einem Kopfteil 27, umgeben sein. Die Befestigung des Kopfteils 27 am Sensorkopf 22 erfolgt über das Lot 25, mit einem keramischen Hochtemperaturkleber, durch Bördeln o. ä.

Im Fall einer Saphirfaser 24 und/oder eines Saphir - Sensorkopfes 22 besteht die Aufgabe, einen mechanischen Schutz zu realisieren, ohne die Lichtleitung zu kompromittieren. Auch hier ist gleichermassen eine Hochtemperaturbeschichtung 25, 26 möglich, insbesondere da Gold und Aluminium eine hohe Reflektivität im infraroten Spektralbereich besitzen. Zudem sind in Zukunft auch Saphirfasern mit Cladding zu erwarten. Anstelle oder ergänzend zur Hochtemperaturbeschichtung 25, 26 ist wiederum eine Schutzkapillare 27, 28 vorgesehen.

Insgesamt wird durch die Ummantelung 25, 26, 27, 28, insbesondere die Hochtemperaturbeschichtung 25, 26 und/oder die Schutzkapillare 27, 28, die Einsetzbarkeit der Messsonde 21 in schwierigen Messumgebungen deutlich verbessert. Es ist dabei wesentlich, dass die Hochtemperaturbeschichtung 25, 26 und die Schutzkapillare 27, 28 mechanisch flexibel sind, um die Vorteile der Biegsamkeit der Messsonde 21 zu wahren. Darüberhinaus ist für lange Fasern 24 zum Ausgleich der unterschiedlichen thermischen Ausdehnungskoeffizienten von Faser 24 und Kapillare 28 eine Kompensationsschlaufe 29 vorgesehen. Die Distanz zum Detektor 32 kann von einer gewöhnlichen Verlängerungsfaser 31 überbrückt und mit optischen Steckern 30 versehen sein.

Das Hochtemperatur - Pyrometer weist bedeutende Vorzüge auf. Durch die lichtleitende Messsonde 21 wird ein starrer, geradliniger Sichtkanal 2 oder Saphirstab 14 gemäss Fig. 1 oder Fig. 2 überflüssig. Ebenso entfallen an der Schnittstelle zwischen dem Hoch- und Niedertemperaturbereich der Gasturbine die Einkoppeloptik 4, 15 für die Niedertemperaturfaser 5, 16 sowie das druckdichte Sichtfenster 3 mitsamt der aufwendigen Kühlung und Luftspühlung 9 und den schweren Montageflanschen. Stattdessen zeichnet sich die lichtleitende Messsonde 21 durch Kompaktheit, Hochtemperaturfestigkeit der Bestandteile und des Aufbaus sowie eine einfache Schützbarkeit gegen mechanische und korrosive Einwirkungen unter Beibehaltung der faseroptischen Flexibilität aus. Die Messsonde 21 ist auch in engen Radien bis zu einigen cm biegbar und daher an vielen, auch schwer zugänglichen Orten in Maschinen einbaubar. Mit dem mikrooptischen Sensorkopf 22 sind auch ausserordenlich heisse Messobjekte aus grosser Nähe und mit hoher Ortsauflösung beobachtbar. Die Vielseitigkeit der Messsonde 21 ist auch daraus ersichtlich, dass der Detektor 32 und die Messelektronik 33 auch eine spektrometrische Auswertung der Wärmestrahlung liefern können. Verfälschungen des Spektrums durch eine ungleichmässige spektrale Transmission des Pyrometers 20 können ausgemessen und korrigiert werden. Das Spektrum kann z. B. Auskunft über die Oberflächenbeschaffenheit des Messobjekts geben.

Das optische Hochtemperatur - Pyrometer 20 ist besonders zur Bestimmung von Strahlungstemperaturen in einer Gasturbine geeignet. Für eine solche Weiterbildung bzw. Verwendung ist die Messsonde 21 im Innenraum der Gasturbine zur Erfassung der Wärmestrahlung thermisch hochbelasteter Bauteile angeordnet, eine Faser 24, 31 zur Übertragung der Wärmestrahlung zu einem Detektor 32 vorzugsweise ausserhalb der Gasturbine vorgesehen und der Detektor 32 mit der Messelektronik 33 verbunden.

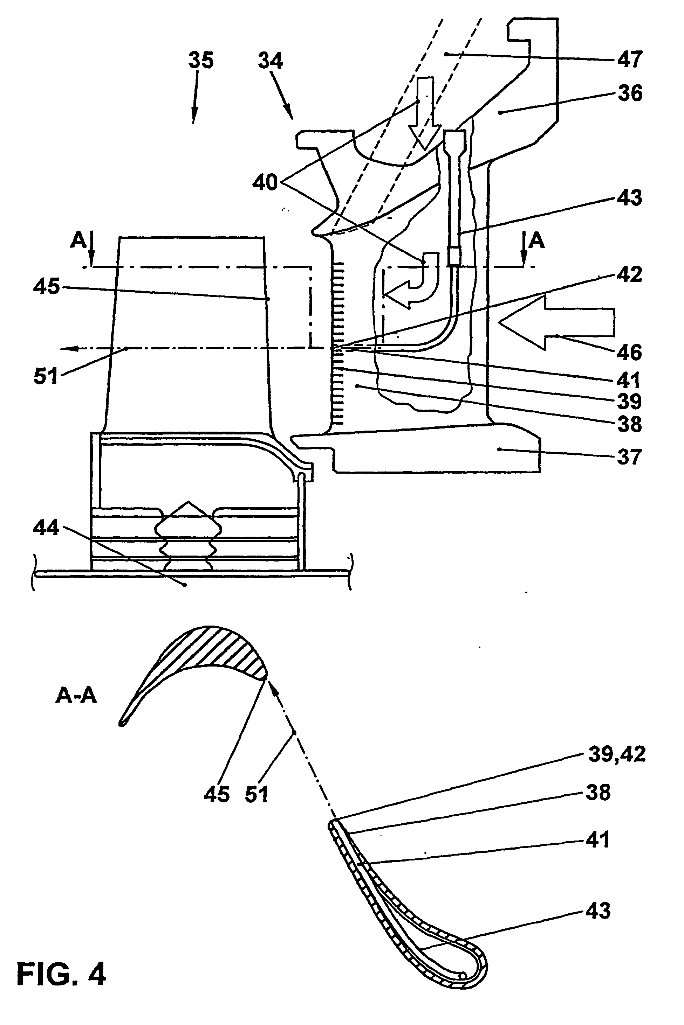

Eine besonders nützliche Weiterbildung bzw. Verwendung des Pyrometers 20 betrifft eine störunempfindliche, präzise Temperaturmessung an rotierenden oder stationären Turbinenschaufeln. Für diesen Zweck sitzt die Messsonde 21 in einer Bohrung 41 in einer Leitschaufel 34, 48 vorzugsweise der ersten oder zweiten Reihe. Die Faser 24, 31, insbesondere innerhalb der Heissgaszone die Hochtemperaturfaser 24, liegt mindestens teilweise in einem Kühlkanal der Gasturbine. Zudem ist ein Führungsrohr 43 zur Aufnahme der Faser 24, 31 und/oder der Messsonde 21 vorgesehen. Im Detail sind drei bevorzugte Ausführungsformen eines derartigen Pyrometers 20 in den Fig. 4 - 6 dargestellt.

Fig. 4 zeigt eine Leitschaufel 34 und eine Laufschaufel 35 vorzugsweise der ersten oder zweiten Reihe einer Niederdruckgasturbine in einer Seitenansicht und im Profil entlang des Schnittes A - A. Die Leitschaufel 34 ist zwischen Schaufelfuss 36 und Schaufelplattform 37 fixiert und lenkt die Heissgasströmung 46 auf die Laufschaufel 35, die auf dem Rotor 44 befestigt ist. In der Leitschaufel 34 erstrecken sich zwischen Schaufelfuss 36 und Hinterkante 38 Schaufel - Kühlkanäle 39, die aus den nicht dargestellten Kühlkanälen der Gasturbine mit Kühlluft 40 versorgt werden. In der Leitschaufel 34 ist eine Bohrung 41 eingelassen, insbesondere eingegossen oder einerodiert, die eine Öffnung 42 an einer Hinterkante 38 der Leitschaufel 34 aufweist. Der Sensorkopf 22 ist in der Öffnung 42 mit Blickrichtung auf eine Laufschaufel 35, insbesondere auf eine Vorderkante 45 einer Laufschaufel 35, angeordnet.

Vorzugsweise verläuft die Bohrung 41 entlang der Schaufel - Kühlkanäle 39 und weist ein Führungsrohr 43 zur Aufnahme der Messsonde 21 auf. Das Führungsrohr 43 besitzt am Ende einen Anschlag, der eine korrekte Positionierung des Sensorkopfes 22 in der Leitschaufel 34 gewährleistet, und ist von Kühlluft 40 durchströmt. Für eine noch effizientere Kühlung der Messsonde 21 und zugleich Spühlung des Sensorkopfes 22 können zudem in dem Führungsrohr 43 Löcher für die Kühlluft 40 vorgesehen sein. Mit dem Führungsrohr 43 bzw. seiner nicht dargestellten Fortsetzung zur Aufnahme der Faser 24, 31 und mit druckdichten Durchführungen lassen sich verschiedene Gasturbinenwandungen bzw. Gasturbinenplenen unterschiedlichen Druckniveaus einfach durchdringen. Am Ende des Führungsrohres 43 ist eine Dichtung zwischen dem Führungsrohr 43 und der Schutzkapillare 28 vorgesehen. Die Messsonde 21 ist aufgrund ihrer Flexibilität und Stabilität bis zu ca. 6 m auch in gebogene Führungsrohre 43 problemlos hineinschiebbar.

In einem derartigen Pyrometeraufbau kommen die obengenannten Vorteile voll zur Geltung. Der Durchmesser der Messsonde 21 beträgt selbst mit Schutzkapillare 27, 28 unter 2 mm und mit Führungsrohr 43 2.5 mm im Gegensatz zu bis zu 60 mm eines gestrichelt angedeuteten Sichtkanals 46 für ein herkömmliches Pyrometer 1. Dadurch erst ist der Einbau des erfindungsgemässen Hochtemperatur - Pyrometers 20 in eine Leitschaufel 34 ohne schädigende mechanische Schwächung möglich und eine Verlegung der Messsonde 21 im Kühlsystem der Gasturbine bis zur Hochtemperaturzone realisierbar. Die Kühlung erfolgt somit ohne Zusatzaufwand und erhöht die Lebensdauer des Pyrometers 20 wesentlich. Darüberhinaus ist das Pyrometer 20 auch während des Betriebes der Gasturbine einfach auswechselbar.

Auch die Vorteile hinsichtlich der Messgenauigkeit sind bedeutend. Durch den Einbau der Messsonde 21 in einer gekühlten Leitschaufel 34 von ca. 600 °C bei einer zu messenden Oberflächentemperatur der Laufschaufel 35 von ca. 700 °C-1000 °C sind die Probleme aufgrund von Eigenstrahlung und Eigenabsorption des Sensorkopfes 22 und der Hochtemperaturbeschichtung 25, 26 aus Gold o. ä. weitgehend zurückgedrängt. Die kleine Fläche der Mikrolinse 22 und ihre Positionierung zwischen den Schaufel - Kühlkanälen 39 gewährleisten eine sehr effiziente Spühlung und Sauberhaltung durch die Kühlluft 40. Der Abstand zum Messobjekt und der Messfleck sind sehr klein oder sogar minimal. Dadurch sind Störungen aufgrund diffus reflektierter Fremdstrahlung von Nachbarschaufeln, Schaufelfüssen 36, dem Rotor 44, der Gehäuseumgebung des Heissgaskanals usw. reduziert. Schliesslich wird eine hohe Ortsauflösung der Temperaturmessung an der rotierenden Laufschaufel 35 durch den kleinen Messfleck in Kombination mit einer schnellen Messelektronik 33 erzielt. Die erforderliche Bandbreite von 100 kHz - 1 MHz kann mit InGaAs - Photodioden und schnellen DSP - Prozessoren erreicht werden. In einer solchen Konfiguration können individuelle Temperaturprofile aller Laufschaufeln 35 der ersten Reihe aufgenommen, heisse Laufschaufeln 35 identifiziert und Temperaturmaxima innerhalb einzelner Laufschaufeln 35 detektiert werden.

Ebenfalls vorteilhaft ist es, dass die Blickrichtung von der Leitschaufelhinterkante 38 auf die Laufschaufelvorderkante 45 weitgehend normal zur betrachteten wärmeabstrahlenden Fläche steht. Für reale, nicht diffus streuende Oberflächen kann nämlich die Winkelverteilung der emittierten Strahlung stark vom Lambertschen Cosinusgesetz abweichen und insbesondere in einem kritischen Winkelbereich oberhalb von 30° stark abfallen. Dieses Verhalten ist z. B. aus dem Lehrbuch R. Siegel und John R. Howell, "Thermal Radiation Heat Transfer", Hemisphere Publishing Corporation, Washington, ersichtlich (s. z. B. S. 178). Der kritische Winkelbereich tritt in der Praxis oftmals zwischen 60° und 80° auf und verfälscht wegen der Variabilität bzw. Unbestimmtheit der Emissivität die Temperaturmessung. Mit dem erfindungsgemässen Pyrometer 20 kann jedoch die Messung ausgeführt werden, solange die Blickrichtung innerhalb eines Kegels mit ca. 30° Öffnungswinkel von der Flächennormalen der betrachteten Zone der Laufschaufel 35 liegt. Im Gegensatz dazu beträgt der Blickwinkel mit einem herkömmlichen Sichtkanal 47 60° und mehr, woraus erhebliche Messfehler resultieren können.

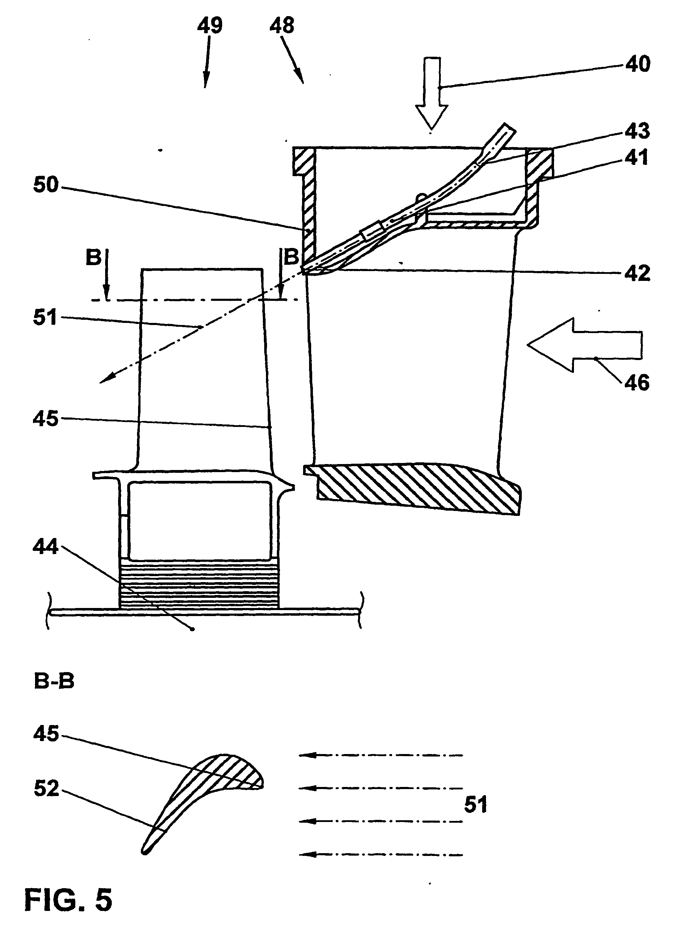

Fig. 5 zeigt eine Leitschaufel 48 und eine Laufschaufel 49 vorzugsweise der ersten oder zweiten Reihe einer Hochdruckgasturbine in einer Seitenansicht und eine Laufschaufel 49 im Profil entlang des Schnittes B - B. Wegen der KühlStrukturen der Leitschaufel 48 ist es unmöglich, einen Sichtkanal für ein herkömmliches Pyrometer 1 einzubauen. Jedoch kann ein Hochtemperatur - Pyrometer 20 im Schaufelfuss 37 integriert sein. Wiederum ist in einer Leitschaufel 48 eine Bohrung 41 vorgesehen, die nun eine Öffnung 42 an einer Hinterwand 50 des Schaufelfusses 36 der Leitschaufel 48 aufweist. Der Sensorkopf 22 ist in der Öffnung 42 mit Blickrichtung auf die Laufschaufel 49 angeordnet. Die bei Fig. 4 gemachten Ausführungen hinsichtlich der Bohrung 41, dem Führungsrohr 43, der Messsonde 21, der Schutzkapillare 27, 28 usw. und die Vorteile treffen hier gleichermassen oder entsprechend zu. Der Neigungswinkel der Bohrung 41 relativ zur Heissgasströmungsrichtung 46 ist mit ca. 30° immer noch klein, so dass die Blickrichtung 51 der Messsonde 21 kleine Winkel mit den Flächennormalen auf der Laufschaufel 49 bildet. Wie im Profil dargestellt wird bei der Rotordrehung ein Grossteil der Laufschaufel 49, insbesondere die Vorderkante 45 und die Druckseite 52 im Bereich der Hinterkante, von der Messsonde 21 überstrichen. Dadurch kann die Hochdrucklaufschaufel 49 sehr genau in Bezug auf heisse Zonen überwacht werden.

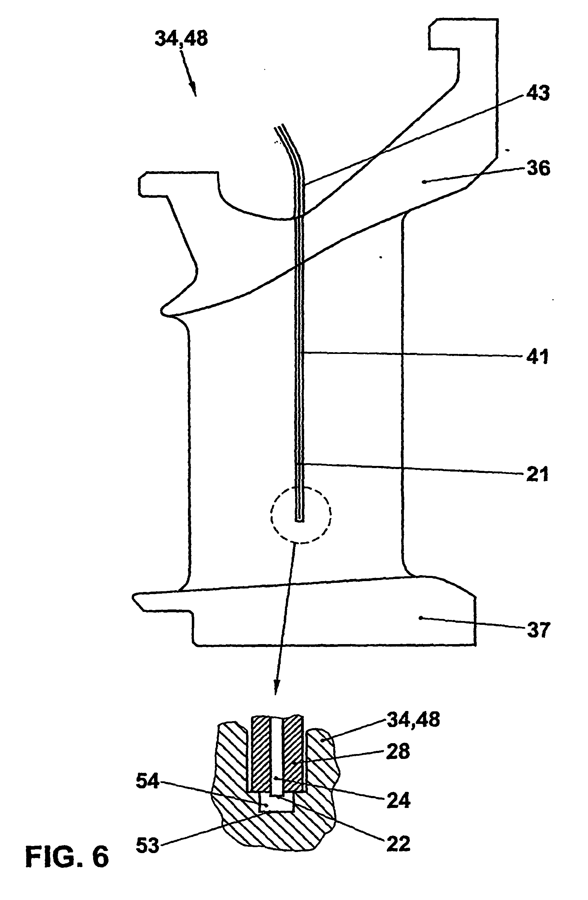

Fig. 6 offenbart eine Ausführungsform eines Hochtemperatur - Pyrometers 20 für die Messung der Oberflächentemperatur einer Leitschaufel 34, 48. Die Bohrung 41 befindet sich in einer Wand der Leitschaufel 34, 48 möglichst nahe an der Oberfläche, wo sie eingelassen, insbesondere einerodiert, ist, und weist ein Sackloch 53 mit einer Abstandshalterung für den Sensorkopf 22 auf. Der Sensorkopf 22 bildet mit dem Sackloch 53 der Bohrung 41 eine Mikrokavität 54, die als schwarzer Hohlraumstrahler wirkt. Die Messsonde 21 und der Sensorkopf 22 sind wiederum wie bei Fig. 3 beschrieben ausgebildet. Bevorzugt besteht die Messsonde 21 aus einer dünnen monokristallinen Saphirfaser 24 mit einer sehr dünnen Schutzkapillare 28. Dann genügt eine Bohrung 41 mit einem Durchmesser von ca. 0.8 mm, die eine Länge von beispielsweise 100 mm haben kann. Ein Führungsrohr 43 ist erst ausserhalb der Bohrung 41 vorgesehen. Prinzipiell ist ein abgewinkelter oder bogenförmiger Verlauf der Bohrung 41 denkbar. Die Abstandshalterung kann z. B. ein stufenförmiger Absatz, eine Verjüngung der Bohrung 41, eine Hülse o. ä. sein. Sie sorgt für die Einhaltung einer fixen Distanz von ca. 4 - 6 mm zwischen dem Sensorkopf 22 und dem Ende der Bohrung 41. Die Dimensionen und der Aufbau der Mikrokavität 54 dürfen von den gemachten Angaben durchaus abweichen. Wichtig für eine genaue Temperaturmessung ist lediglich, dass die Wände der Mikrokavität 54 die zu messende Temperatur, d. h. in diesem Fall mindestens näherungsweise die Oberflächentemperatur einer Leitschaufel 34, 48, aufweisen und dass die Grösse und damit Emissivität der Mikrokavität 54 konstant gehalten werden.

Durch diesen Pyrometeraufbau wird ein fast idealer schwarzer Hohlraumstrahler für eine oberflächennahe Temperatur der Leitschaufel 34, 48 realisiert. Ein solcherart ausgestaltetes Pyrometer 20 zeichnet sich durch die früher genannten Vorteile aus. Darüberhinaus ist es den heutzutage eingesetzten Hochtemperatur - Thermoelementen in Bezug auf Lebensdauer, Signalstärke und Messgenauigkeit überlegen. Beispielsweise sind Alterungseffekte selbst bei hohen Wandtemperaturen von ca. 950 °C gering, die Signalstärke bzw. Lichtenergie der Wärmestrahlung nimmt mit der Temperatur stark zu und Messfehler durch Wärmeleitung im Sensor und aufgrund sehr grosser Temperaturgradienten in der Schaufelwand von bis zu 300 °C / mm entfallen wegen der berührungsfreien Messmethode.

Das Pyrometer 20 ist auch zur Messung von Temperaturen anderer Bauteile einer Gasturbine, wie z. B. des Rotors 44 oder der Gehäuseumgebung, oder von Gastemperaturen sowie zur Messung von Temperaturen in einem Gasturbinen - Triebwerk geeignet. Für diese Anwendungen sind die hier offenbarten Ausführungsformen und Einbauvarianten entsprechend anzupassen. Zur gleichzeitigen Temperaturmessung an verschiedenen Orten in einer Gasturbine können auch mehrere Pyrometer 20 installiert sein und ihre Wärmestrahlungssignale von einer gemeinsamen Messelektronik 33 ausgewertet werden. Auch ist jeweils neben oder anstelle der pyrometrischen Temperaturbestimmung eine spektrometrische Erfassung der Oberflächenbeschaffenheit möglich.

Eine weitere Ausführungsform betrifft eine Gasturbine mit einer Leitschaufel 34, 48, die eine Bohrung 41 zur Aufnahme der Messsonde 21 aufweist, mit einem Kühlkanal, der zur mindestens teilweisen Aufnahme der Faser 24, 31 dient, und mit einem Führungsrohr 43 zur Aufnahme der Faser 24, 31 und/oder der Messsonde 21. Insbesondere weist die Bohrung 41 eine Öffnung 42 an einer Hinterkante 38 der Leitschaufel 34 oder an einer Hinterwand 50 eines Schaufelfusses (36) der Leitschaufel (48) auf und ist der Sensorkopf 22 in der Öffnung 42 mit Blickrichtung auf eine Laufschaufel 35, 49 angeordnet. Alternativ dazu kann sich die Bohrung 41 in einer Wand der Leitschaufel 34, 48 möglichst nahe an der Oberfläche befinden und ein Sackloch 53 aufweisen, in dem eine Abstandshalterung für den Sensorkopf 22 so angeordnet ist, dass der Sensorkopf 22 mit dem Sackloch 53 eine Mikrokavität 54 bildet.

Die Erfindung hat ferner Verfahren zur Überwachung einer Gasturbine mit Hilfe eines erfindungsgemässen Hochtemperatur - Pyrometers (20) zum Gegenstand. Voraussetzung ist, dass wie zuvor die Messsonde 21 im Innenraum der Gasturbine zur Erfassung der Wärmestrahlung thermisch hochbelasteter Bauteile angeordnet ist, eine Faser 24, 31 zur Übertragung der Wärmestrahlung zu einem Detektor 32 vorzugsweise ausserhalb der Gasturbine vorgesehen ist und der Detektor 32 mit einer Messelektronik 33 verbunden ist. Dann wird in der Messelektronik 33 ein charakteristisches Temperatursignal mindestens eines thermisch hochbelasteten Bauteils berechnet und das Temperatursignal als Schutzsignal zur Überwachung der Gasturbine verwendet. Die Überwachung umfasst die Kontrolle thermischer Überbeanspruchungen des Bauteils, bei Bedarf eine Lastabsenkung durch Drosselung der Brennstoffzufuhr, oder eine Aufzeichnung der Temperaturbelastungsgeschichte des Bauteils zur Abschätzung seiner mutmasslichen Lebensdauer.

Besonders wichtig ist die Überwachung der Temperaturen der Laufschaufeln 35, 49 und Leitschaufeln 34, 48 insbesondere der ersten und zweiten Reihe. Die Schaufeln 34, 35, 48, 49 sind thermisch so stark belastet, dass ihre Lebensdauer bereits durch relativ moderate Übertemperaturen von einigen 10 °C deutlich abnehmen kann. Wegen der grossen Temperaturdifferenz von einigen 100 °C zwischen dem Heissgas und den gekühlten Schaufeln 34, 35, 48, 49 ist jedoch die Gefahr solcher Übertemperaturen erheblich. Zudem können einzelne Schaufeln 34, 35, 48, 49 wegen Defekten überhitzt werden. Zum Schutz davor ist das erfindungsgemässe Pyrometer 20 aufgrund seiner verbesserten Messgenauigkeit sehr gut geeignet. Insbesondere wird das Pyrometer 20 zunächst durch eine Vergleichsmessung mit einem perfekten schwarzen Strahler kalibriert. Dann sind absolute Temperaturmessungen bei 1000 °C mit einer Messgenauigkeit von besser als ± 10 °C erreichbar. Somit sind Übertemperaturen von Schaufeln 34, 35, 48, 49 erstmals mit hinreichender Genauigkeit bzw. Zuverlässigkeit messbar. Vorzugsweise werden als charakteristisches Temperatursignal ein mittleres Temperatursignal und/oder Einzeltemperatursignale von Laufschaufeln 35, 49 oder Leitschaufeln 34, 48, insbesondere einer Reihe von Laufschaufeln 35, 49 oder Leitschaufeln 34, 48, verwendet. Darüberhinaus ist das Pyrometer 20 auch ein wertvolles Hilfsmittel, um die Schaufeltemperaturen im Betrieb kontrolliert näher an die Belastungsgrenze zu bringen und dadurch den Wirkungsgrad der Gasturbine zu erhöhen.

### BEZUGSZEICHENLISTE

- 1: Land - Pyrometer (Stand der Technik)
- 2: Sichtkanal
- 3: Sichtfenster
- 4: Einkoppeloptik
- 5: optische Niedertemperaturfaser
- 6: Detektor
- 7: elektrische Signalleitung
- 8: Messelektronik
- 9: Luftspühlung
- 10: Turbinengehäuse
- 11: Schallschutzhaube ("Enclosure")
- 12: Accufiber - Pyrometer (Stand der Technik)
- 13: schwarzer Hohlraumstrahler (Kavität)
- 14: Saphirstab (Al₂O₃ - Einkristall)
- 15: optischer Koppler
- 16: optische Niedertemperaturfaser
- 17: Detektor
- 18: Photodiode
- 19: optisches Filter
- 20: Hochtemperatur - Pyrometer
- 21: lichtleitende Messsonde
- 22: mikrooptischer Sensorkopf, Konus, Mikrolinse
- 23: Spleiss
- 24: optische Hochtemperaturfaser
- 25, 26: Hochtemperaturbeschichtung
- 25: Goldlot
- 26: Goldmantel
- 27, 28: Schutzkapillare
- 27: Kopfteil der Schutzkapillare
- 28: Schutzkapillare
- 29: Kompensationsschlaufe
- 30: optischer Stecker
- 31: Verlängerungsfaser
- 32: Detektor
- 33: Messelektronik
- 34: Niederdruckleitschaufel
- 35: Niederdrucklaufschaufel
- 36: Schaufelfuss
- 37: Schaufelplattform
- 38: Hinterkante der Leitschaufel
- 39: Schaufel - Kühlkanäle
- 40: Kühlluft
- 41: Bohrung
- 42: Öffnung
- 43: Führungsrohr
- 44: Rotor
- 45: Vorderkante der Laufschaufel
- 46: Heissgasströmung
- 47: Sichtkanal für Land - Pyrometer
- 48: Hochdruckleitschaufel
- 49: Hochdrucklaufschaufel
- 50: Hinterwand des Schaufelfusses
- 51: Blickrichtung des Hochtemperatur - Pyrometers
- 52: Druckseite im Bereich der Hinterkante
- 53: Sackloch
- 54: Mikrokavität
- D: grösster Konusdurchmesser
- L: Konuslänge

## Patentansprüche

1. Gasturbine, insbesondere geeignet zur Erzeugung elektrischer Energie, mit einem Hochtemperatur - Pyrometer (20) zur Temperaturmessung in der Gasturbine, wobei das Hochtemperatur - Pyrometer (20) eine lichtleitende Messsonde (21) zur Erfassung und Übertragung von Wärmestrahlung zu einem Detektor (32) aufweist und der Detektor (32) mit einer Messelektronik (33) verbunden ist,
**dadurch gekennzeichnet, dass** die Messsonde (21) eine optische Hochtemperaturfaser (24) mit einem hochtemperaturfesten mikrooptischen Sensorkopf (22) umfasst und die Hochtemperaturfaser (24) und der Sensorkopf (22) eine hochtemperaturfeste, biegsame Ummantelung (25, 26, 27, 28) aufweisen, dass der mikrooptische Sensorkopf (22) eine Empfangsfläche zur Erfassung von Wärmestrahlung eines beabstandeten Messobjekts aufweist,
dass der mikrooptische Sensorkopf (22) und die Hochtemperaturfaser (24) aus einem für einen den gewünschten Spektralbereich transparenten Material bestehen, dass die Messsonde (21) in einem Hochtemperaturbereich im Innenraum der Gasturbine zur Erfassung der Wärmestrahlung thermisch hoch belasteter Bauteile (35, 49, 34, 48, 44), von Temperaturen der Gehäuseumgebung oder von Gastemperaturen derart angeordnet ist, dass eine Leitschaufel (34, 48) vorzugsweise der ersten oder zweiten Reihe eine Bohrung (41) aufweist, in der die Messsonde (21) sitzt, dass die Hochtemperaturfaser (24) mindestens teilweise in einem Kühlkanal der Gasturbine verläuft und dass die Gasturbine ein Führungsrohr (43) zur Aufnahme der Messsonde (21) und/oder einer Verlängerungsfaser (31) umfasst.

2. Gasturbine nach Anspruch 1,
**dadurch gekennzeichnet, dass** ein Durchmesser der Messsonde (21) mit einer Schutzkapillare (27, 28) unter 2 mm und mit dem Führungsrohr (43) unter 2,5 mm beträgt und
dass die Messsonde (21) im Kühlsystem der Gasturbine bis zur Hochtemperaturzone verlegt ist.

3. Gasturbine nach Anspruch 1 oder 2,
**dadurch gekennzeichnet, dass** der Detektor (32) ausserhalb der Gasturbine angeordnet ist und die Verlängerungsfaser (31) zur Übertragung der Wärmestrahlung zu dem Detektor (32) vorgesehen ist.

4. Gasturbine nach Anspruch 3,
**dadurch gekennzeichnet, dass** das Hochtemperatur - Pyrometer (20) auch während des Betriebs der Gasturbine auswechselbar ist.

5. Gasturbine nach einem der Ansprüche 1 bis 4,
**dadurch gekennzeichnet, dass** die Bohrung (41) eine Öffnung (42) an einer Hinterkante (38) der Leitschaufel (34) oder an einer Hinterwand (50) eines Schaufelfusses (36) der Leitschaufel (48) aufweist,
dass der Sensorkopf (22) in der Öffnung (42) mit Blickrichtung auf eine Laufschaufel (35, 49) angeordnet ist, und
dass die Blickrichtung innerhalb eines Kegels mit 30° Öffnungswinkel von der Flächennormalen einer betrachteten Zone der Laufschaufel (35, 49) liegt.

6. Gasturbine nach einem der Ansprüche 1 bis 4,
**dadurch gekennzeichnet, dass** sich die Bohrung (41) in einer Wand der Leitschaufel (34, 48) möglichst nahe an der Oberfläche befindet und ein Sackloch (53) aufweist, dass das Sackloch (53) eine Abstandshalterung für den Sensorkopf (22) aufweist und
dass der Sensorkopf (22) mit dem Sackloch (53) eine Mikrokavität (54) bildet, die als schwarzer Hohlraumstrahler für eine oberflächennahe Temperatur der Leitschaufel (34, 48) wirkt.

7. Gasturbine nach einem der Ansprüche 1 bis 6,
**dadurch gekennzeichnet, dass** der Sensorkopf (22) ein Konus (22) oder eine Mikrolinse (22) ist und der Sensorkopf (22) und die Hochtemperaturfaser (24) einstückig ausgebildet sind oder miteinander in einer hochtemperaturfesten optischen Verbindung stehen, und
dass für eine gewünschte Grösse eines Messflecks und einen vorgegebenen Objektabstand eine Brennweite der Mikrolinse (22) und eine Konuslänge (L) optimiert sind.

8. Gasturbine nach einem der Ansprüche 1 bis 7,
**dadurch gekennzeichnet, dass** die Hochtemperaturfaser (24) eine Hochtemperaturbeschichtung (26) und eine Schutzkapillare (28) aufweist und der Sensorkopf (22) eine Hochtemperaturbeschichtung (25) und/oder eine Schutzkapillare (27) aufweist, und
dass die Hochtemperaturfaser (24) und der Sensorkopf (22) aus Quarzglas oder Saphirkristall bestehen, die Hochtemperaturbeschichtung (25, 26) aus einem Metall, insbesondere Gold oder Aluminium besteht, und die Schutzkapillare (27, 28) aus einem Metall, insbesondere Inconel, besteht.

9. Verfahren zur Überwachung einer Gasturbine, die gemäss einem der vorangehenden Ansprüche ausgestaltet ist,
**dadurch gekennzeichnet, dass** in der Messelektronik (33) ein charakteristisches Temperatursignal mindestens eines thermisch hochbelasteten Bauteils (35, 49, 34, 48, 44) berechnet wird,
dass das Temperatursignal als Schutzsignal zur Überwachung der Gasturbine verwendet wird, wobei das Bauteil eine Reihe von Laufschaufeln (35, 49) oder Leitschaufeln (34, 48) ist und als charakteristisches Temperatursignal ein mittleres Temperatursignal und/oder Einzeltemperatursignale der Laufschaufeln (35, 49) oder Leitschaufeln (34, 48) verwendet wird oder werden.

10. Verfahren zur Überwachung einer Gasturbine nach Anspruch 9,
**dadurch gekennzeichnet, dass** die Überwachung eine Kontrolle thermischer Überbeanspruchungen des Bauteils (35, 49, 34, 48, 44), bei Bedarf eine Lastabsenkung durch Drosselung der Brennstoffzufuhr oder eine Aufzeichnung der Temperaturbelastungsgeschichte des Bauteils (35, 49, 34, 48, 44) zur Abschätzung seiner Lebensdauer umfasst und/oder eine spektrometrische Auswertung der Wärmestrahlung durchgeführt wird und aus dem Spektrum eine Oberflächenbeschaffenheit des Messobjekts bestimmt wird.

## Claims

1. Gas turbine, in particular suitable for the generation of electrical energy, with a high-temperature pyrometer (20) for measuring the temperature in the gas turbine, the high-temperature pyrometer (20) having a light-guiding measuring probe (21) for the detection and transmission of heat radiation to a detector (32), and the detector (32) being connected to measuring electronics (33), **characterized in that** the measuring probe (21) comprises an optic high-temperature fibre (24) with a high-temperature-resistant microoptical sensor head (22), and the high-temperature fibre (24) and the sensor head (22) having a high-temperature-resistant flexible sheathing (25, 26, 27, 28), **in that** the microoptical sensor head (22) has a reception surface for the detection of heat radiation from a spaced-apart measurement object, **in that** the microoptical sensor head (22) and the high-temperature fibre (24) consist of a material transparent for the desired spectral range, **in that** the measuring probe (21) is arranged in a high-temperature region in the interior of the gas turbine for the detection of heat radiation from components (35, 49, 34, 48, 44) subjected to high thermal load, of temperatures of casing surroundings or of gas temperatures, in such a way that a guide blade (34, 48) preferably the first or the second row has a bore (41), in which the measuring probe (21) is seated, **in that** the high-temperature fibre (24) runs at least partially in a cooling duct of the gas turbine, and **in that** the gas turbine comprises a guide tube (43) for receiving the measuring probe (21) and/or an extension fibre (31).

2. Gas turbine according to Claim 1, **characterized in that** a diameter of the measuring probe (21) together with a protective capillary (27, 28) is below 2 mm and together with the guide tube (43) is below 2.5 mm, and **in that** the measuring probe (21) is laid in the cooling system of the gas turbine as far as the high-temperature zone.

3. Gas turbine according to Claim 1 or 2, **characterized in that** the detector (32) is arranged outside the gas turbine and the extension fibre (31) is provided for transmitting the heat radiation to the detector (32).

4. Gas turbine according to Claim 3, **characterized in that** the high-temperature pyrometer (20) is exchangeable even during the operation of the gas turbine.

5. Gas turbine according to one of Claims 1 to 4, **characterized in that** the bore (41) has an orifice (42) at a trailing edge (38) of the guide blade (34) or at a trailing wall (50) of a blade foot (36) of the guide blade (48), **in that** the sensor head (22) is arranged in the orifice (42) with a viewing direction towards a moving blade (35, 49), and **in that** the viewing direction lies within a cone with a 30° aperture angle from the perpendicular to the surface of a viewed zone of the moving blade (35, 49).

6. Gas turbine according to one of Claims 1 to 4, **characterized in that** the bore (41) in a wall of the guide blade (34, 48) is located as near as possible to the surface and has a blind hole (53), **in that** the blind hole (53) has a spacer holding device for the sensor head (22), and **in that** the sensor head (22) forms with the blind hole (53) a microcavity (54) which acts as a black cavity emitter for a near-surface temperature of the guide blades (34, 48).

7. Gas turbine according to one of Claims 1 to 6, **characterized in that** the sensor head (22) is a cone (22) or a microlens (22), and the sensor head (22) and the high-temperature fibre (24) are produced in one piece or are optically connected to one another so as to be resistant to high temperature, and **in that** a focal length of the microlens (22) and a cone length (L) are optimized for a desired size of a measuring spot and for a predetermined object spacing.

8. Gas turbine according to one of Claims 1 to 7, **characterized in that** the high-temperature fibre (24) has a high-temperature coating (26) and a protective capillary (28), and the sensor head (22) has a high-temperature coating (25) and/or a protective capillary (27), and **in that** the high-temperature fibre (24) and the sensor head (22) consist of quartz glass or sapphire crystal, the high-temperature coating (25, 26) consists of a metal, in particular gold or aluminium, and the protective capillary (27, 28) consists of a metal, in particular Inconel.

9. Method for monitoring a gas turbine which is designed according to one of the preceding claims, **characterized in that** a characteristic temperature signal from at least one component (35, 49, 34, 48, 44) subjected to a high thermal load is calculated in the measuring electronics (33), and **in that** the temperature signal is used as a protective signal for monitoring the gas turbine, the component being a row of moving blades (35, 49) or guide blades (34, 48), and the characteristic temperature signal used being an average temperature signal and/or individual temperature signals of the moving blades (35, 49) or guide blades (34, 48).

10. Method for monitoring a gas turbine according to Claim 9, **characterized in that** the monitoring comprises a check of thermal overstresses of the component (35, 49, 34, 48, 44), if required a load lowering by the throttling of the fuel supply or a recording of the thermal load history of the component (35, 49, 34, 48, 44) for the estimation of its useful life, and/or a spectrometric evaluation of the irradiation is carried out and a surface quality of the measurement object is determined from the spectrum.

## Revendications

1. Turbine à gaz, qui convient en particulier pour la production d'énergie électrique, avec un pyromètre à haute température (20) pour la mesure de la température dans la turbine à gaz, dans laquelle le pyromètre à haute température (20) comporte une sonde de mesure conductrice de la lumière (21) pour la détection et la transmission d'un rayonnement thermique à un détecteur (32) et le détecteur (32) est raccordé à une électronique de mesure (33), **caractérisée en ce que** la sonde de mesure (21) comprend une fibre optique à haute température (24) avec une tête de détecteur micro-optique (22) résistant aux hautes températures et la fibre à haute température (24) et la tête de détecteur (22) présentent une gaine flexible (25, 26, 27, 28) résistant aux hautes températures, **en ce que** la tête de détecteur micro-optique (22) présente une face de réception pour la détection d'un rayonnement thermique d'un objet de mesure distant, **en ce que** la tête de détecteur micro-optique (22) et la fibre à haute température (24) se composent d'un matériau transparent pour le domaine spectral désiré, **en ce que** la sonde de mesure (21) est disposée dans une région à haute température dans l'espace intérieur de la turbine à gaz pour détecter le rayonnement thermique de pièces à forte sollicitation thermique (35, 49, 34, 48, 44), de températures de l'environnement du corps ou de températures de gaz, de telle façon qu'une aube directrice (34, 48), de préférence de la première ou de la deuxième rangée, présente un alésage (41) dans lequel la sonde de mesure (21) est posée, **en ce que** la fibre à haute température (24) se trouve au moins en partie dans un canal de refroidissement de la turbine à gaz, et **en ce que** la turbine à gaz comprend un tube de guidage (43) destiné à recevoir la sonde de mesure (21) et/ou une fibre de prolongement (31).

2. Turbine à gaz selon la revendication 1, **caractérisée en ce qu'**un diamètre de la sonde de mesure (21) vaut moins de 2 mm avec un capillaire de protection (27, 28) et moins de 2,5 mm avec le tube de guidage (43) et **en ce que** la sonde de mesure (21) est placée dans le réseau de refroidissement de la turbine à gaz jusqu'à la zone à haute température.

3. Turbine à gaz selon la revendication 1 ou 2, **caractérisée en ce que** le détecteur (32) est disposé à l'extérieur de la turbine à gaz et la fibre de prolongement (31) est prévue pour la transmission du rayonnement thermique jusqu'au détecteur (32).

4. Turbine à gaz selon la revendication 3, **caractérisée en ce que** le pyromètre à haute température (20) peut être remplacé même pendant le fonctionnement de la turbine à gaz.

5. Turbine à gaz selon l'une quelconque des revendications 1 à 4, **caractérisée en ce que** l'alésage (41) présente une ouverture (42) à une arête arrière (38) de l'aube directrice (34) ou à la paroi arrière (50) d'un pied d'aube (36) de l'aube directrice (48), **en ce que** la tête de détecteur (22) est disposée dans l'ouverture (42) avec sa direction de visée vers une aube mobile (35, 49), et **en ce que** la direction de visée est située à l'intérieur d'un cône avec un angle d'ouverture de 30° par rapport à la normale à la surface de la zone observée de l'aube mobile (35, 49).

6. Turbine à gaz selon l'une quelconque des revendications 1 à 4, **caractérisée en ce que** l'alésage (41) se trouve dans une paroi de l'aube directrice (34, 48) le plus près possible de la surface et présente un trou borgne (53), **en ce que** le trou borgne (53) comporte un épaulement d'écartement pour la tête de détecteur (22), et **en ce que** la tête de détecteur (22) forme avec le trou borgne (53) une microcavité (54), qui fait office d'émetteur à corps noir pour une température proche de la surface de l'aube directrice (34, 48).

7. Turbine à gaz selon l'une quelconque des revendications 1 à 6, **caractérisée en ce que** la tête de détecteur (22) est un cône (22) ou une microlentille (22) et la tête de détecteur (22) et la fibre à haute température (24) sont formées d'un seul tenant ou sont l'une avec l'autre en liaison optique résistant aux hautes températures, et **en ce qu'**une distance focale de la microlentille (22) et une longueur de cône (L) sont optimisées pour une grandeur désirée de la tache de mesure et pour une distance prédéterminée de l'objet.

8. Turbine à gaz selon l'une quelconque des revendications 1 à 7, **caractérisée en ce que** la fibre à haute température (24) présente un revêtement pour haute température (26) et un capillaire de protection (28) et la tête de détecteur (22) présente un revêtement pour haute température (25) et/ou un capillaire de protection (27), et **en ce que** la fibre à haute température (24) et la tête de détecteur (22) sont composées de verre de quartz ou de cristal de saphir, le revêtement pour haute température (25, 26) se compose d'un métal, en particulier d'or ou d'aluminium, et le capillaire de protection (27, 28) se compose d'un métal, en particulier d'Inconel.

9. Procédé de surveillance d'une turbine à gaz, qui est équipée selon l'une quelconque des revendications précédentes, **caractérisé en ce que** l'on calcule dans l'électronique de mesure (33) un signal de température caractéristique d'au moins une pièce à forte sollicitation thermique (35, 49, 34, 48, 44), **en ce que** l'on utilise le signal de température comme signal de protection pour la surveillance de la turbine à gaz, dans lequel la pièce est une rangée d'aubes mobiles (35, 49) ou d'aubes directrices (34, 48), et on utilise comme signal de température caractéristique un signal de température moyen et/ou des signaux de température individuels des aubes mobiles (35, 49) ou des aubes directrices (34, 48).

10. Procédé de surveillance d'une turbine à gaz selon la revendication 9, **caractérisé en ce que** la surveillance comprend un contrôle des surcharges thermiques de la pièce (35, 49, 34, 48, 44), au besoin une diminution de la charge par étranglement de l'alimentation en carburant, ou on effectue un enregistrement de l'historique de la charge thermique de la pièce (35, 49, 34, 48, 44) pour l'évaluation de sa durée de vie et/ou une évaluation spectrométrique du rayonnement thermique et on détermine un état de surface de l'objet de mesure à partir du spectre.
